(19) **Europäisches Patentamt / European Patent Office / Office européen des brevets**

(11) **EP 4 349 890 A1**

(12) **EUROPEAN PATENT APPLICATION**
published in accordance with Art. 153(4) EPC

(43) Date of publication:
**10.04.2024   Bulletin 2024/15**

(21) Application number: **22828654.8**

(22) Date of filing: **14.06.2022**

(51) International Patent Classification (IPC):
**C08J 5/04** (2006.01)      **C08J 5/06** (2006.01)
**C08K 9/00** (2006.01)      **C08K 7/02** (2006.01)
**C08K 7/06** (2006.01)      **C08K 7/14** (2006.01)
**D01F 6/90** (2006.01)

(52) Cooperative Patent Classification (CPC):
**C08J 5/04; C08J 5/06; C08K 7/02; C08K 7/06; C08K 7/14; C08K 9/00; D01F 6/90**

(86) International application number:
**PCT/KR2022/008357**

(87) International publication number:
**WO 2022/270807 (29.12.2022 Gazette 2022/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:  **25.06.2021   KR 20210083192**

(71) Applicant: **Kolon Industries, Inc.**
**Seoul 07793 (KR)**

(72) Inventors:
• **KIM, Sang Hwan**
  **Seoul 07793 (KR)**
• **BYEON, Euihyeon**
  **Seoul 07793 (KR)**

(74) Representative: **Ter Meer Steinmeister & Partner Patentanwälte mbB**
**Nymphenburger Straße 4**
**80335 München (DE)**

(54) **FIBER REINFORCED COMPOSITE AND ARTICLES COMPRISING SAME**

(57)    The present application relates to a fiber reinforced composite. More particularly, the present application relates to a fiber reinforced composite comprising a polyamide-based resin and an aramid staple fiber, and articles comprising the same.

EP 4 349 890 A1

**Description**

**[TECHNICAL FIELD]**

CROSS-REFERENCE TO RELATED APPLICATIONS

This application claims priority benefit of Korean Patent Application No. 10-2021-0083192, filed on June 25, 2021, the contents of which are incorporated herein by reference in its entirety.

The present application relates to a fiber reinforced composite. More particularly, the present application relates to a fiber reinforced composite comprising a polyamide-based resin and an aramid staple fiber, and articles comprising the same.

**[BACKGROUND ART]**

Fiber reinforced plastics are attracting attention as a material that can replace metals, with the expectation that they can utilize the advantages of polymer resins and fibers.

For example, aramid fiber, which is an aromatic polyamide fiber, has the advantages of high specific strength, specific elastic modulus, heat resistance, toughness, and abrasion resistance, and PA66, which is one of the polyamide resins, has the advantages of high strength, high heat resistance, chemical resistance, flame retardancy, and excellent processability. Therefore, it may be considered to prepare materials having excellent wear resistance and mechanical strength through fiber reinforced plastics containing them.

However, the interface adhesion between the fiber and the resin contained in fiber-reinforced plastics is often not good. If the dispersibility of fibers in the resin is not secured, problems may arise in that the properties of the produced fiber reinforced plastic do not meet the expected physical properties.

**[DETAILED DESCRIPTION OF THE INVENTION]**

**[Technical Problem]**

It is an object of the present application to provide a fiber reinforced composite having excellent mechanical properties (e.g., flexural strength, tensile strength, etc.).

It is another object of the present application to provide a fiber reinforced composite having excellent wear resistance (friction resistance).

It is yet another object of the present application to provide a fiber reinforced composite excellent in mechanical properties and wear resistance and having low specific gravity.

It is a yet further object of the present application to provide articles comprising the fiber reinforced composite.

All of the above and other objects of the present application can be solved by the present application which is described in detail below.

**[Technical Solution]**

In embodiments of the present application, the present application relates to a fiber reinforced composite comprising a polyamide-based resin; and an aramid staple fiber imparted with twists. The composite has a structure in which (a plurality of) aramid staple fibers as a dispersed phase are dispersed and present in a polyamide-based resin as a continuous phase.

The inventors of the present application have found that improving the dispersibility and interface adhesion of fibers in the fiber reinforced composite can reduce the weight of the composite and also improve the mechanical properties and wear resistance of the composite, and completed the invention of this application.

In specific embodiments of the present application, the aramid staple fiber can be obtained by chopping the aramid fibers imparted with a predetermined twist number through a twisting process into a predetermined length, as described below.

The aramid fiber or staple fiber is not particularly limited, but considering the strength of the fibers necessary for ensuring mechanical properties, it may have a fineness of 500 deniers or more, 600 deniers or more, 700 deniers or more, 800 deniers or more, 900 deniers or more, 1000 deniers or more, 1100 deniers or more, 1200 deniers or more, 1300 deniers or more, 1400 deniers or more, or 1500 deniers or more. The upper limit of the fineness is not particularly limited, but may be, for example, 3000 denier or less, 2500 denier or less, 2000 denier or less, 1500 denier or less, or 1000 denier or less.

In one illustrative example, the aramid staple fiber may have a length in the range of 1.0 to 10.0 mm. Specifically, the length of the aramid staple fiber may be 2 mm or more, 3 mm or more, 4 mm or more, 5 mm or more, 6 mm or more, 7 mm or more, 8 mm or more, or 9 mm or more, and the upper limit thereof may be, for example, 9 mm or less, 8 mm or less, 7 mm or less, 6 mm or less, 5 mm or less, 4 mm or less, 3 mm or less, or 2 mm or less. As compared with long fibers exceeding the above range, the aramid staple fiber is advantageous in maintaining excellent dispersibility within the polyamide-based resin relative to the long fiber.

The staple fiber having the above length can be produced through chopping of the plied yarn. Specifically, the aramid fiber to be chopped has a plied yarn structure in which at least two primarily twisted yarns are secondarily twisted together (that is, made by twisting the primarily twisted yarns). Accordingly, the chopped aramid staple fiber may also have a structure imparted with twists.

At this time, the term "secondary twisting" means twisting a yarn or a filament in an either direction, and the term "secondarily twisted yarn" may refer to a single ply yarn made by twisting yarns or filaments in an either direction, that is, a single yarn. Although not particularly limited, the primary twisting may mean, for example, twisting in a counterclockwise direction. Additionally, the term "plied yarn" means a yarn made by twisting two or more secondary twisted yarns together in an either direction. The term "secondary twisting" may mean twisting in the opposite direction to the twisting in which the primary twisting is performed. For example, the second twisting may mean twisting in a clockwise direction.

The secondarily twisted yarn made by twisting in the primary twisting direction may have a predetermined twist number. At this time, the term "twist number" means the number of twists per 1 m, and its unit may be TPM (Twist Per Meter).

In one illustrative example, the aramid staple fiber may be a fiber imparted with twists in the range of 30 to 200 TPM (twist per meter).

In a specific embodiment of the present application, the aramid staple fiber may include a secondarily twisted yarn imparted with twists in the range of 30 to 200 TPM (twist per meter). For example, the lower limit of the twist number of the primarily twisted yarn contained in the staple fiber may be, for example, 35 TPM or more, 40 TPM or more, 45 TPM or more, 50 TPM or more, 55 TPM or more, 60 TPM or more, 65 TPM or more, 70 TPM or more, 75 TPM or more or 80 TPM or more. Further, the upper limit of the twist number may be, for example, 190 TPM or less, 180 TPM or less, 170 TPM or less, 160 TPM or less, 150 TPM or less, 140 TPM or less, 130 TPM or less, 120 TPM or less, 110 TPM or less, 100 TPM or less, 90 TPM or less, 80 TPM or less, or 70 TPM or less.

In a specific embodiment of the present application, the twist number between the primarily twisted yarns contained in the aramid staple fiber (i.e., the twist number during secondary twisting) may be in the range of 30 to 200 TPM (twist per meter). For example, the lower limit of the twist number between the primarily twisted yarns contained in the staple fiber may be, for example, 35 TPM or more, 40 TPM or more, 45 TPM or more, 50 TPM or more, 55 TPM or more, 60 TPM or more, 65 TPM or more, 70 TPM or more, 75 TPM or more, or 80 TPM or more. And, the upper limit of the twist number between the primarily twisted yarns may be, for example, 190 TPM or less, 180 TPM or less, 170 TPM or less, 160 TPM or less, 150 TPM or less, 140 TPM or less, 130 TPM or less, 120 TPM or less, 110 TPM or less, 100 TPM or less, 90 TPM or less, 80 TPM or less, or 70 TPM or less.

Although not particularly limited, the twist number (primary twisting number) during primary twisting and the twist number (secondary twisting number) during secondary twisting, which are imparted during the production of aramid fiber, may be the same or different.

If the twist number does not satisfy the above range, the contact area of the aramid staple fiber with the polyamide-based resin as the continuous phase may become lower, and the interface adhesion between the polyamide-based resin and the aramid staple fiber may become lower. Further, in the aramid staple fiber with too large or small twist number, the surface area of the fiber coated with a sizing agent described below is reduced, which makes it impossible to provide sufficient interface adhesion between the fiber and the resin, and the fiber fails to have excellent dispersibility within the polyamide-based resin. As a result, in order to sufficiently improve mechanical properties, etc., it is advantageous to satisfy the above twist number and increase the physical contact area between the fiber and the resin.

In one illustrative example, the aramid fiber or the aramid staple fiber may have a 2-ply structure in which two primarily twisted yarns are twisted, or a 3-ply structure in which three primarily twisted yarns are twisted, but is not limited thereto.

In one illustrative example, the fiber reinforced composite may include 15 wt.% or less of the aramid staple fiber based on 100 wt.% of the total weight of the composite. Specifically, in the composite, the content of the aramid staple fiber may be, for example, less than 15 wt.%, more specifically, less than 14 wt.%, less than 13 wt.%, less than 12 wt.%, less than 11wt.%, less than 10wt.%, less than 9 wt.%, less than 8 wt.%, less than 7 wt.%, 6 % or less by weight, or 5 wt.% or less. The aramid staple fiber having the above-mentioned twist number have excellent interface adhesion and dispersibility to the polyamide-based resin, and therefore, even when using the aramid staple fiber with a small content (for example, 10 wt.% or less) as described above, sufficient improvement in the physical properties of the composite can be expected.

Although not particularly limited, the lower limit of the content of the aramid staple fiber in the fiber reinforced composite may be adjusted in consideration of the mechanical strength of the composite or the like, and may be, for example, 0.5 wt.% or more, 1.0 wt.% or more, 1.5 wt.% or more, 2.0 wt.% or more, 2.5 wt.% or more, 3.0 wt.% or more, 3.5 wt.% or more, 4.0 wt.% or more, 4.5 wt.% or more, or 5.0 wt.% or more.

In one illustrative example, the fiber reinforced composite may include 20 parts by weight or less of the aramid staple fiber based on 100 parts by weight of the polyamide-based resin. Specifically, based on 100 parts by weight of polyamide resin, the upper limit of the content of the aramid staple fiber may be 15 parts by weight or less, 10 parts by weight or less, or 5 parts by weight or less. The aramid staple fiber having the above-mentioned twist number have excellent interface adhesion and dispersibility to the polyamide resin, and therefore, even if the aramid staple fiber is used in a content (1/5 level or less) considerably lower than the content of the polyamide-based resin as described above, sufficient improvement in the physical properties of the composite can be expected.

Although not particularly limited, based on 100 parts by weight of the polyamide resin, the lower limit of the content of the aramid staple fiber can be adjusted in consideration of the mechanical strength of the composite, or the like, and may be for example, 0.1 parts by weight or more, 0.5 parts by weight or more, 1.0 parts by weight or more, 1.5 parts by weight or more, 2.0 parts by weight or more, 2.5 parts by weight or more, 3.0 parts by weight or more, 3.5 parts by weight or more, 4.0 parts by weight or more, 4.5 parts by weight or more, or 5.0 parts by weight or more.

In one illustrative example, the surface of the aramid staple fiber may be treated with a sizing agent. That is, a sizing agent may be bonded to the surface of the aramid staple fiber. The sizing agent not only provides excellent chopping properties to the aramid fiber, but also can improve the interface adhesion between the polyamide-based resin and the aramid staple fiber (e.g., chemical bonding force) and the dispersibility of the aramid staple fiber. As described below, treatment with a sizing agent may be performed prior to chopping the aramid fiber.

The type of the sizing agent in the present application is not particularly limited. For example, a known urethane-based sizing agent, epoxy-based sizing agent, and/or amide-based sizing agent may be used as the sizing agent.

In one illustrative example, the content ratio of the sizing agent to the aramid fiber or the aramid staple fiber may range from 1.0 to 10.0 wt.%. The content of the sizing agent refers to the attachment rate of the sizing agent to the aramid fiber, and can be calculated by the following equation 1 regarding the so-called pickup rate.

[Equation 1]

$$\text{Pickup rate (\%)} = [(W2 - W1)/W1] \times 100$$

in equation 1, W1 is the weight of the aramid fiber in dry state, W2 means the weight of the aramid fiber after surface treatment with a sizing agent. At this time, the time point after surface treatment with the sizing agent means the time point when heat treatment is completed after immersing the fiber in the sizing agent.

Specifically, the lower limit of the content ratio of the sizing agent to the aramid fiber or the aramid staple fiber may be 2 wt.% or more, 3 wt.% or more, 4 wt.% or more, 5 wt.% or more, 6 wt.% or more, 7 wt.% or more, 8 wt. or more, or 9 wt.% or more. And, the upper limit thereof may be, for example, 9 wt.% or less, 8 wt.% or less, 7 wt.% or less, 6 wt.% or less, 5 wt.% or less, 4 wt.% or less, 3 wt.% or less, or 2 wt.% or less.

In one illustrative example, the fiber reinforced composite may further include one or more fibers selected from a glass fiber and a carbon fiber.

The type of the polyamide-based resin is not particularly limited. For example, the polyamide-based resin used herein may include nylon 6, nylon 66, nylon 46, nylon 11, nylon 12, nylon 610, nylon 612, nylon 6/66 copolymer, nylon 6/66/610 copolymer, nylon MXD6, nylon 6T, nylon 6/6T copolymer, nylon 66/PP copolymer and nylon 66/PPS copolymer, N-alkoxyalkylated compound thereof, or the like.

In one illustrative example, the fiber reinforced composite may have a specific gravity of 1.25 or less according to ASTM D792. Specifically, the fiber reinforced composite may have a specific gravity of 1.20 or less, more specifically, 1.19 or less, 1.18 or less, 1.17 or less, 1.16 or less, 1.15 or less, or 1.14 or less. As mentioned above, this application uses the aramid staple fiber whose properties are adjusted so that it has excellent interface adhesion and dispersibility to the polyamide resin, and therefore, a small amount of the aramid staple fiber can be used, which makes it possible to reduce the weight of the composite.

Although not particularly limited, the lower limit of the specific gravity of the fiber reinforced composite may be, for example, 1.10 or more, 1.11 or more, 1.12 or more, 1.13 or more, 1.14 or more, or 1.15 or more.

In one illustrative example, the fiber reinforced composite that satisfies the above specific gravity may have a tensile strength in the range of 80 to 100 Mpa according to ASTM D638. Specifically, the tensile strength of the fiber reinforced composite may be 81 Mpa or more, 82 Mpa or more, 83 Mpa or more, 84 Mpa or more, 85 Mpa or more, 86 Mpa or more, 87 Mpa or more, 88 Mpa or more, 89 Mpa or more, 90 Mpa or more, 91 Mpa or more, 92 Mpa or more, 93 Mpa or more, 94 Mpa or more, or 95 Mpa or more. As mentioned above, the present application uses the aramid staple fiber whose properties have been adjusted so that it has excellent interface adhesion and dispersibility to the polyamide-based resin, and therefore, it is possible to provide a composite having a sufficient tensile strength within the above range even at low specific gravity.

In one illustrative example, the fiber reinforced composite that satisfies the above specific gravity may have a flexural strength in the range of 120 to 140 Mpa according to ASTM D790. Specifically, the flexural strength of the fiber reinforced composite may be 121 Mpa or more, 122 Mpa or more, 123 Mpa or more, 124 Mpa or more, 125 Mpa or more, 126 Mpa or more, 127 Mpa or more, 128 Mpa or more, 129 Mpa or more, 130 Mpa or more, 131 Mpa or more, 132 Mpa or more, 133 Mpa or more, 134 Mpa or more, or 135 Mpa or more. As mentioned above, the present application uses the aramid staple fiber whose properties have been adjusted so that it has excellent interface adhesion and dispersibility to the polyamide-based resin, and therefore, it is possible to provide a composite having a sufficient flexural strength within the above range even at low specific gravity.

In one illustrative example, the fiber reinforced composite that satisfies the above specific gravity may have a friction coefficient of less than 0.12 according to ASTM D3702. Specifically, the frictional coefficient of the fiber reinforced composite may be 0.11 or less, 0.10 or less, 0.09 or less, 0.08 or less, 0.07 or less, or 0.06 or less. Usually, friction associated with the composite often occurs because the fiber separates from the resin. Therefore, in order to improve the friction problem, that is, to lower the frictional coefficient, it is necessary to improve the dispersibility of the fibers so that the fibers are present in the resin without separating from the resin. As mentioned above, the present application uses the aramid staple fiber whose properties have been adjusted so that it has excellent interface adhesion and dispersibility to the polyamide resin, and therefore, it is possible to provide a composite having a sufficiently low frictional coefficient within the above range even while using a small amount of aramid fiber.

The use of the composite of the present invention as mentioned above is not particularly limited.

For example, the composite can be used in a field of an automobile. Specifically, the composite may be included in an article such as an automobile interior material, an automobile exterior material, or a balanced gear. More specifically, the composite can be used in door frame inner cover, transmission gear support, sun visor retainer, inner door handle assembly, window drum, carrier plate, safety belt jointer, bush, engine mount, head rest guide, and the like.

In another illustrative example, the composite can be used in parts that require weight reduction and wear or friction resistance. Specifically, the composite can be used in various gears used in ATMs, printer devices, etc., or in door closer parts such as refrigerators and laundry machine, and additionally, can be used in centralizer, conveyor belt, bearing, caster, and the like.

In another embodiment of this application, this application relates to a method for producing a fiber reinforced composite.

Specifically, the above method may comprise the steps of: preparing an aramid staple fiber imparted with twists in the range of 30 to 200 TPM (twist per meter); and charging the prepared aramid staple fiber and a polyamide-based resin into an extruder and then discharging them to produce a fiber-reinforced composite.

The characteristics of the fiber reinforced composite and each component constituting it are as described above.

In one illustrative example, the aramid staple fiber can be produced by imparting a twist to an aramid yarn (fiber) surface-coated with a sizing agent (producing a primarily twisted yarn and a secondarily twisted yarn), and then chopping the yarn imparted with twists by a chopping process. That is, the method may further comprise imparting a twist to the aramid yarn surface-coated with a sizing agent and then chopping the yarn imparted with twists. At this time, the twist number is the same as described above, and a staple fiber having the above-mentioned length (in the range 1.0 to 10.0 mm) can be obtained by chopping.

The surface coating method using a sizing agent is not particularly limited. For example, the step of immersing the aramid yarn (fiber) in a sizing agent solution and heat-treating it may be performed. Although not particularly limited, the immersion time of the aramid yarn (fiber) in the sizing agent may be in the range of about 1 second to 30 seconds, about 2 seconds to 20 seconds, or about 3 seconds to 10 seconds so that the sizing agent can be coated in an appropriate amount. Further, heat treatment on the fiber coated with the sizing agent may be performed at a temperature of about 200 to 500 °C, or about 250 to 300°C for about 3 to 30 seconds, considering sufficient drying of the sizing agent and suppression of damage caused by heat.

In one illustrative example, the coating with the sizing agent may be performed to ensure that the coating degree satisfies the above pickup rate.

The content ratio of the resin and the fiber charged into an extruder is as described above.

In one illustrative example, the method can be carried out using an extruder that includes one charge ports.

In one illustrative example, the method can be carried out using an extruder that includes two or more charge ports. In this case, the staple fiber can be more uniformly distributed within the resin. For example, one charge ports may be used to charge polyamide-based resin, and another charge ports may be used to charge the aramid staple fiber. The resin and the fiber charged into the extruder through the charge ports can be discharged to the die through a discharge port while mixing and moving on the screw inside the extruder.

In one illustrative example, the charge ports may be formed by every certain distance along the length of a screw included in the extruder.

Although not particularly limited, the charge ports into which the polyamide-based resin is charged may be called a hopper, and the charge ports into which aramid short fibers are charged may be called a feeder.

In one illustrative example, the method can be carried out using a twin screw extruder, but is not particularly limited.

The form of the discharged fiber reinforced composite is not particularly limited. For example, the fiber reinforced composite can be provided in pellet form, sheet form, and the like.

In one embodiment of the present application, this application relates to articles comprising the above-mentioned fiber reinforced composite. The characteristics of the fiber reinforced composite are as described above.

The articles comprising the fiber reinforced composites is not particularly limited.

For example, the composite may be included in automobile-related articles. Specifically, the present application may relate to an automobile-related article such as an automobile interior material, an automobile exterior material, or a balanced gear containing the above-mentioned composite. More specifically, the composite can be used in door frame inner cover, transmission gear support, sun visor retainer, inner door handle assembly, window drum, carrier plate, safety belt jointer, bush, engine mount, head rest guide, and the like.

In another illustrative example, the composite can be used in parts that require weight reduction and wear or friction resistance. Specifically, the composite can be used in various gears used in ATMs, printer devices, etc., or in door closer parts such as refrigerator and laundry machine, and additionally, can be used in centralizer, conveyor belt, bearing, caster, and the like.

In a specific embodiment of the present application, the present application may relate to a balance gear comprising a fiber reinforced composite. Similar to Experimental Examples described below, the composite comprising the aramid staple fiber can provide excellent wear resistance. In addition, when glass fiber or carbon fiber, which is known to improve the wear resistance of the material, is used in the composition of the composite along with the aramid staple fibers described above, it is considered to be suitable for balance gear applications that require excellent wear resistance and durability due to friction with metal.

Accordingly, in a specific embodiments of the present application, the balance gear comprises a fiber reinforced composite which comprises a polyamide-based resin; an aramid staple fiber imparted with twists in the range of 30 to 200 TPM (twist per meter); and one or more fibers selected from a glass fiber and a carbon fiber.

In relation to the fiber reinforced composite included in the balance gear, description concerning the properties of polyamide-based resin and the aramid staple fiber is the same as described above.

In one illustrative example, the glass fiber and/or the carbon fiber may be in the form of short fibers or long fibers. Specifically, the glass fiber and/or the carbon fiber, which are staple fibers, may have a length in the range of 1 to 10 mm. In addition, the glass fiber and/or the carbon fiber, which are long fibers, may have a length of 10 mm or more, for example, in the range of 10 to 20 mm.

In one illustrative example, twist may be imparted to the glass fiber and/or the carbon fiber. Although not particularly limited, the twist number imparted to glass fiber and/or carbon fiber may be the same as or different from that for the aramid staple fibers described above.

In one illustrative example, the composite may include 45 wt.% or less of the glass fiber and/or carbon fiber based on the total weight of the composite. For example, the composite may include 45 wt.% or less of glass fiber, or 45 wt.% or less of carbon fiber based on 100 wt.% of the total composite. In another illustrative example, the composite may include a glass fiber and a carbon fiber so that the total of the glass fiber and the carbon fiber is 45 wt.% or less based on 100 wt.% of the total composite. The content of these fibers exceeding 45 wt.% may hinder the flow of resin in the screw during extrusion, which makes it difficult to produce the composite (deterioration in processability or productivity). Additionally, if an excessive amount of fiber is used, such as exceeding 45 wt.%, at the time of processing into pellets, pellet cutting becomes difficult, or the cut surface becomes defective, and reinforced fibers are exposed on the outer surface of the produced pellets, resulting in poor marketability.

Although not particularly limited, based on 100 wt.% of the total composite, the upper limit of the content of the glass fiber and/or carbon fiber may be, for example, 40 wt.% or less, 35 wt.% or less, 30 wt.% or less, 25 wt.% or less, 20 wt.% or less, 15 wt.% or less, or 10 wt.% or less, and the lower limit thereof may be, for example, 5 wt.% or more, 10 wt.% or more, 15 wt.% or more, 20 wt.% or more, 25 wt.% or more, or 30 wt.% or more.

**[Advantageous Effects]**

According to specific embodiments of the present application, a composite excellent in mechanical properties and wear resistance while having low specific gravity is provided.

**[DETAILED DESCRIPTION OF THE EMBODIMENTS]**

Hereinafter, actions and effects of the invention will be described in more detail with reference to specific examples of the invention. However, these examples are for illustrative purposes only, and the scope of the invention is not limited thereby in any way.

**Experimental Example 1: Measurement of tensile strength, flexural strength, and specific gravity of composite**

The tensile strength, flexural strength, and specific gravity were measured for the specimens prepared in Examples and Comparative Examples below.

**Example 1**

**Preparation of aramid staple fiber:** Aramid fibers with a total fineness of about 2,000 denier were immersed into a urethane-based sizing agent for about 7 seconds, and then heat-treated at a temperature of about 285°C for about 15 seconds to obtain an aramid fiber whose surfaces were coated with the sizing agent (pickup rate: about 5 wt.%). Then, a twist number of about 70 TPM was imparted to the fiber whose surface was coated with the sizing agent through a twisting process. Specifically, during the twisting process, both the secondary twisting and the primary twisting were set to 70 TPM, and the fiber imparted with twists has a 2-ply structure. Next, the fiber was chopped so that the length of the aramid fiber imparted with the twist number was about 5 mm.65

**Production of pellet-shaped composite:** Using an extruder, a composite in which the aramid staple fiber was dispersed in the polyamide-based resin (PA66) was produced. At this time, in order to uniformly disperse the staple fiber in the resin, the fibers were charged through a feeder located on the charge side of the extruder (opposite the discharge port) (separately from the polyamide resin charged through the hopper). The produced pellet has a cylindrical shape with a height of about 5 mm and a diameter of about 5 mm.

The characteristics of the produced composite are shown in Table 1.

**Example 2**

A composite was produced in the same manner as in Example 1, except for those described in Table 1 below.

**Comparative Examples 1 to 3**

A commercially available product from RTP company was used as a comparative example. At this time, Comparative Examples 1 to 3 are the same except that the contents of the aramid staple fiber and polyamide-based resin are different as shown in Table 1 below.

[Table 1]

| | Content (wt.%) | | Characteristics of composite | | |
|---|---|---|---|---|---|
| | PA66 | Aramid fiber | Tensile strength (Mpa) | Flexural strength (Mpa) | Specific gravity |
| Example 1 | 95 | 5 | 88 | 127 | 1.15 |
| Example 2 | 90 | 10 | 93 | 132 | 1.16 |
| Comparative Example 1 (RTP 200 AR 5) | 95 | 5 | 58 | 124 | 1.15 |
| Comparative Example 2 (RTP 200 AR 10) | 90 | 10 | 82 | 131 | 1.16 |
| Comparative Example 3 (RTP 200 AR 15) | 85 | 15 | 89 | 138 | 1.17 |
| * Tensile strength: measured according to ASTM D638.<br>* Flexural strength: measured according to ASTM D790.<br>* Specific gravity: measured according to ASTM D792. | | | | | |

As shown in Table 1, it is confirmed that as compared with commercially available products, the composites

**EP 4 349 890 A1**

of Examples according to the present invention can provide excellent tensile strength and flexural strength even when containing aramid fibers at a relatively low content (i.e., low specific gravity).

**Experimental Example 2: Measurement of frictional coefficient**

The frictional coefficient was measured for the specimens prepared in Examples and Comparative Examples below.

**Example 3**

The composite prepared in Example 1 was used.

**Example 4**

The composite prepared in Example 2 was used.

**Comparative Example 4**

A commercially available product (RTP 200) from RTP company was used as Comparative Example 4.

**Comparative Example 5**

A composite containing 20 wt.% of the carbon fiber, which was mainly used to enhance the wear resistance, was used as Comparative Example 5. A composite was produced in the same manner as in Example 1, except that no twist was imparted to the carbon fiber.

**Comparative Example 6**

A composite containing 20 wt.% of the glass fiber, which was mainly used to enhance the wear resistance, was used as Comparative Example 6. A composite was produced in the same manner as in Example 1, except that no twist was imparted to the glass fiber.

**Comparative Example 7**

Tribocomp® from Solvay containing 15 wt.% of the aramid fiber was used as Comparative Example 7.

**Comparative Example 8**

A commercially available product from RTP company (RTP 200 AR 15 TFE 15) was used as Comparative Example 8. This product contains 15 wt.% of Teflon (TFE) resin, which was used to lower the frictional coefficient.

[Table 2]

|  | Content (wt.%) | | Characteristics of composite | |
| --- | --- | --- | --- | --- |
|  | PA66 | Fiber | Frictional coefficient | Specific gravity |
| Example 3 | 95 | 5 (Aramid) | 0.07~0.08 | 1.15 |
| Example 4 | 90 | 10 (Aramid) | 0.08~0.10 | 1.16 |
| Comparative Example 4 (RTP 200) | 100 | - | 0.60 | 1.14 |
| Comparative Example 5 | 80 | 20 (carbon fiber) | 0.24 | 1.23 |
| Comparative Example 6 | 80 | 20 (glass fiber) | 0.29 | 1.28 |
| Comparative | 85 | 15 (Aramid) | 0.13 | 1.15 |

(continued)

| | Content (wt.%) | | Characteristics of composite | |
|---|---|---|---|---|
| | PA66 | Fiber | Frictional coefficient | Specific gravity |
| Example 7 (Solvay Tribocomp®) | | | | |
| Comparative Example 8 (RTP 200 AR 15 TFE 15) | PA66 70+ TFE(Teflon) resin wt.% | 15 (Aramid) | 0.39 | 1.27 |
| * Frictional coefficient (dimensionless): Measured according to ASTM D3702. <br> * The frictional coefficient of Comparative Example 7 is the value listed in the Solvay catalog. | | | | |

As shown in Table 2, it is confirmed that the frictional coefficient of the composite of Examples of the present invention is low. This means that the composite of the present invention has excellent wear resistance. This is considered to be because the aramid fibers imparted with a predetermined twist number can have an appropriate level of contact area with the polyamide-based resin. In addition, it is considered that improving the dispersibility of aramid fibers within the polyamide-based resin due to the use of sizing agents has an effect on ensuring the low frictional coefficient as described above.

On the other hand, it is common that the frictional coefficient decrease as the fiber content increases, but it is confirmed that in Examples 3 and 4, the difference in frictional coefficient is not large. That is, according to the present invention, a lightweight composite containing a small amount of aramid fibers and having excellent mechanical strength (Table 1) and excellent wear resistance (low frictional coefficient) (Table 2) is provided.

**Claims**

1. A fiber reinforced composite comprising a polyamide-based resin; and an aramid staple fiber imparted with twists in the range of 30 to 200 TPM (twist per meter).

2. The fiber reinforced composite according to claim 1, wherein:
the aramid staple fiber has a length in the range of 1.0 to 10.0 mm.

3. The fiber reinforced composite according to claim 1, wherein:
the aramid staple fiber is contained in an amount of 15 wt.% or less based on the total weight of the composite.

4. The fiber reinforced composite according to claim 1, wherein:
the aramid staple fiber is contained in an amount of 10 wt.% or less based on the total weight of the composite.

5. The fiber reinforced composite according to claim 1, wherein:
the aramid staple fiber is contained in an amount of 0.1 to 20 parts by weight, based on 100 parts by weight of the polyamide-based resin.

6. The fiber reinforced composite according to claim 1, wherein:
the aramid staple fiber is a fiber whose surface is treated with a sizing agent.

7. The fiber reinforced composite according to claim 1, further comprising:
one or more fibers selected from a glass fiber and a carbon fiber.

8. The fiber reinforced composite according to claim 1, wherein:
a specific gravity according to ASTM D792 is 1.25 or less.

9. The fiber reinforced composite according to claim 1, wherein:
a tensile strength according to ASTM D638 ranges from 80 to 100 Mpa.

10. The fiber reinforced composite according to claim 1, wherein:
a flexural strength according to ASTM D790 ranges from 120 to 140 Mpa.

11. The fiber reinforced composite according to claim 1, wherein:
a coefficient of friction according to ASTM D3702 is less than 0.12.

12. An automobile interior material comprising the fiber-reinforced composite according to any one of claims 1 to 11.

13. An automobile exterior material comprising the fiber-reinforced composite according to any one of claims 1 to 11.

14. A balance gear comprising: a fiber reinforced composite which comprises a polyamide-based resin; an aramid staple fiber imparted with twists in the range of 30 to 200 TPM (twist per meter); and one or more fibers selected from a glass fiber and a carbon fiber.

15. The balance gear according to claim 14, wherein:
the composite contains 45 wt.% or less of the glass fiber or the carbon fiber, based on 100 wt.% of the total weight of the composite.

16. A method for producing a fiber reinforced composite, the method comprising the steps of:

preparing an aramid staple fiber imparted with twists in the range of 30 to 200 TPM (twist per meter); and charging the prepared aramid staple fiber and a polyamide-based resin into an extruder and then discharging them to produce a fiber-reinforced composite.

17. The method for producing a fiber reinforced composite according to claim 16, wherein:
the method comprises imparting twists in the range of 30 to 200 TPM to an aramid yarn surface-coated with a sizing agent, and chopping the yarn imparted with twists by a chopping process to prepare an aramid staple fiber with a length in the range of 1.0 to 10.0 mm.

## INTERNATIONAL SEARCH REPORT

| | International application No. |
|---|---|
| | **PCT/KR2022/008357** |

**A. CLASSIFICATION OF SUBJECT MATTER**

**C08J 5/04**(2006.01)i; **C08J 5/06**(2006.01)i; **C08K 9/00**(2006.01)i; **C08K 7/02**(2006.01)i; **C08K 7/06**(2006.01)i; **C08K 7/14**(2006.01)i; **D01F 6/90**(2006.01)i

According to International Patent Classification (IPC) or to both national classification and IPC

**B. FIELDS SEARCHED**

Minimum documentation searched (classification system followed by classification symbols)

C08J 5/04(2006.01); B29K 105/08(2006.01); C08J 5/00(2006.01); C08K 13/06(2006.01); C08K 7/06(2006.01); C08L 101/00(2006.01); C08L 77/06(2006.01); C08L 77/10(2006.01); F16L 11/02(2006.01); F16L 11/10(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리아미드계 수지(polyamide resin), 아라미드 단섬유(aramid short fiber), 꼬임 (twist), TPM(twist per meter), 복합재(composite)

**C. DOCUMENTS CONSIDERED TO BE RELEVANT**

| Category* | Citation of document, with indication, where appropriate, of the relevant passages | Relevant to claim No. |
|---|---|---|
| Y | CN 102746647 A (SUZHOU YUDU MEDICAL MACHINERY CO., LTD.) 24 October 2012 (2012-10-24)<br>See abstract; paragraph [0018]; claim 1; and example 1. | 1-17 |
| Y | KR 10-2014-0004344 A (PYUNG HWA INDUSTRIAL CO., LTD.) 13 January 2014 (2014-01-13)<br>See abstract; and claims 5 and 6. | 1-17 |
| Y | KR 10-2020-0112985 A (BASF SE) 05 October 2020 (2020-10-05)<br>See abstract; and claim 1. | 6,17 |
| A | JP 2019-131659 A (DU PONT-TORAY CO., LTD.) 08 August 2019 (2019-08-08)<br>See entire document. | 1-17 |
| A | US 9688844 B2 (MITSUBISHI GAS CHEMICAL COMPANY, INC.) 27 June 2017 (2017-06-27)<br>See entire document. | 1-17 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **23 September 2022** | **23 September 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

International application No.

**PCT/KR2022/008357**

**C.    DOCUMENTS CONSIDERED TO BE RELEVANT**

| Category* | Citation of document, with indication, where appropriate, of the relevant passages | Relevant to claim No. |
|---|---|---|
| A | CN 104419199 A (HEILONGJIANG XINDA ENTERPRISE GROUP CO., LTD.) 18 March 2015 (2015-03-18)<br>        See entire document. | 1-17 |

## INTERNATIONAL SEARCH REPORT
### Information on patent family members

International application No.

**PCT/KR2022/008357**

| Patent document cited in search report | | | Publication date (day/month/year) | Patent family member(s) | | | Publication date (day/month/year) |
|---|---|---|---|---|---|---|---|
| CN | 102746647 | A | 24 October 2012 | None | | | |
| KR | 10-2014-0004344 | A | 13 January 2014 | None | | | |
| KR | 10-2020-0112985 | A | 05 October 2020 | CN | 111670112 | A | 15 September 2020 |
| | | | | EP | 3746289 | A2 | 09 December 2020 |
| | | | | EP | 3746289 | B1 | 29 December 2021 |
| | | | | JP | 2021-512202 | A | 13 May 2021 |
| | | | | TW | 201937039 | A | 16 September 2019 |
| | | | | US | 2021-0031468 | A1 | 04 February 2021 |
| | | | | WO | 2019-149672 | A2 | 08 August 2019 |
| | | | | WO | 2019-149672 | A3 | 10 October 2019 |
| JP | 2019-131659 | A | 08 August 2019 | JP | 7090385 | B2 | 24 June 2022 |
| US | 9688844 | B2 | 27 June 2017 | AU | 2011-353510 | A1 | 01 November 2012 |
| | | | | AU | 2011-353510 | B2 | 10 April 2014 |
| | | | | BR | 112012014709 | A2 | 12 April 2016 |
| | | | | CA | 2781741 | A1 | 10 September 2012 |
| | | | | CA | 2781741 | C | 27 August 2013 |
| | | | | CN | 102858879 | A | 02 January 2013 |
| | | | | CN | 102858879 | B | 04 December 2013 |
| | | | | EP | 2615139 | A1 | 17 July 2013 |
| | | | | EP | 2615139 | B1 | 30 March 2016 |
| | | | | ES | 2572903 | T3 | 03 June 2016 |
| | | | | JP | 4894982 | B1 | 14 March 2012 |
| | | | | KR | 10-1315921 | B1 | 08 October 2013 |
| | | | | KR | 10-2012-0125602 | A | 16 November 2012 |
| | | | | MX | 2012007384 | A | 03 September 2013 |
| | | | | MY | 158439 | A | 14 October 2016 |
| | | | | RU | 2480497 | C1 | 27 April 2013 |
| | | | | US | 2013-0062806 | A1 | 14 March 2013 |
| | | | | US | 2015-0048539 | A1 | 19 February 2015 |
| | | | | WO | 2012-140785 | A1 | 18 October 2012 |
| CN | 104419199 | A | 18 March 2015 | None | | | |

Form PCT/ISA/210 (patent family annex) (July 2019)

**REFERENCES CITED IN THE DESCRIPTION**

**Patent documents cited in the description**

- KR 1020210083192